Europäisches Patentamt

European Patent Office

Office européen des brevets

(11) Veröffentlichungsnummer: **0 329 841**
**A2**

# (12) EUROPÄISCHE PATENTANMELDUNG

(21) Anmeldenummer: 88120436.6

(22) Anmeldetag: 07.12.88

(51) Int. Cl.4: **H02M 3/335**

(30) Priorität: 22.02.88 DE 3805460

(43) Veröffentlichungstag der Anmeldung:
30.08.89 Patentblatt 89/35

(84) Benannte Vertragsstaaten:
AT BE DE ES FR GB IT NL

(71) Anmelder: **KABELMETAL ELECTRO GMBH**
**Kabelkamp 20 Postfach 260**
**D-3000 Hannover 1(DE)**

(72) Erfinder: **Brahms, Martin, Dipl.-Ing.**
**Silurweg 16**
**D-3000 Hannover 91(DE)**
Erfinder: **Prenner, Christian, Dipl.-Ing.**
**Sandkamp 1**
**D-3012 Langenhagen(DE)**

(54) Verfahren zum Betreiben eines elektrischen Stromversorgungsgeräts mit Gleichspannungswandler.

(57) Es wird ein Verfahren zum Betreiben eines elektrischen Stromversorgungsgeräts mit einem getakteten Gleichspannungswandler (1) angegeben, das einen Übertrager (Ü) mit einer Primärwicklung (6) und mindestens zwei Sekundärwicklungen (7,8) aufweist. Parallel zum Ausgang (A1) der Sekundärwicklung (6), deren Belastung zur Regelung der Breite der dem Übertrager Ü primärseitig aufgegebenen Gleichstromimpulse verwendet wird, ist ein Bauteil (19) mit veränderbarer Stromdurchlässigkeit angeschlossen. Die Stromdurchlässigkeit des Bauteils (19) wird in Abhängigkeit von der Höhe des im Stromkreis dieser Sekundärwicklung (6) fließenden Stromes derart geregelt, daß derselbe unabhängig von der am Ausgang (A1) der Sekundärwicklung (6) anliegenden Belastung einen vorgegebenen Mindestwert nicht unterschreitet.

EP 0 329 841 A2

Die Erfindung bezieht sich auf ein Verfahren zum Betreiben eines elektrischen Stromversorgungsgeräts mit Gleichspannungswandler, der einen Übertrager mit einer Primärwicklung und mindestens zwei Sekundärwicklungen aufweist, mit welchem die Primärwicklung aus einer Gleichspannungsquelle mit Gleichstromimpulsen beaufschlagt wird, mit welchem die Spannung einer der Sekundärwicklungen des Übertragers geregelt wird und mit welchem die Breite der Gleichstromimpulse in Abhängigkeit von der zu regelnden Spannung geregelt wird.

Die Transformation elektrischer Leistung durch Beaufschlagung eines Übertragers mit Gleichstromimpulsen wird bei Geräten angewendet, die als "getaktete Wandler" bezeichnet werden. Solche Wandler sind auf dem Markt erhältlich. Sie dienen zur Stromversorgung unterschiedlichster Verbraucher, beispielsweise in fernmeldetechnischen Einrichtungen. In einigen Einsatzfällen dieser Wandler müssen die sekundärseitig gelieferten Spannungswerte in engen Grenzen eingehalten werden, so daß eine Regelung unerläßlich ist. Dazu wird bei bekannten Anordnungen in der Regel die Spannung derjenigen Sekundärwicklung geregelt, die für die größere bzw. größte Belastung ausgelegt ist. Die Regelung erfolgt primärseitig durch Veränderung der Breite der Gleichstromimpulse. Je nach Belastung der Sekundärspannungen werden die Gleichstromimpulse - im folgenden kurz "Impulse" genannt - mit unterschiedlicher Breite in die Primärwicklung des zum Wandler gehörenden Übertragers eingespeist. Problematisch wird das bei einem Leerlauf der für die Regelung maßgebenden Sekundärspannung. In diesem Fall werden primärseitig nur sehr schmale, einen minimalen Energiebedarf deckende Impulse erzeugt. Das kann dazu führen, daß die an der zweiten und jeder weiteren Sekundärwicklung abzugreifende belastete Spannung zusammenbricht oder zumindest einen vorgegebenen Wert unterschreitet. Angeschlossene Verbraucher werden dann nicht mehr ausreichend mit Strom versorgt. Aus diesem Grunde werden für die bekannten Wandler Grenzen angegeben, bis zu denen die Belastung der geregelten Sekundärspannung gesenkt werden kann. Für andere Fälle werden mit entsprechendem Aufwand und Platzbedarf getrennte Wandler mit jeweils nur einer Sekundärspannung eingesetzt.

Der Erfindung liegt die Aufgabe zugrunde, ein Verfahren anzugeben, mit dem ein getakteter Wandler mit zwei oder mehr Sekundärspannungen unabhängig von der Belastung der für die Regelung verwendeten Sekundärspannung betrieben werden kann.

Diese Aufgabe wird mit einem Verfahren der eingangs geschilderten Art gemäß der Erfindung dadurch gelöst, daß parallel zu der zu regelnden Spannung ein Bauteil mit veränderbarer Stromdurchlässigkeit angeschlossen wird, dessen Stromdurchlässigkeit in Abhängigkeit von der Höhe des im Stromkreis der die zu regelnde Spannung liefernden Sekundärwicklung fließenden Stromes derart geregelt wird, daß der Strom unabhängig von der am Ausgang anliegenden Belastung einen vorgegebenen Mindestwert nicht unterschreitet.

Mit diesem Verfahren kann ein getakteter Wandler für jeden Belastungszustand der zu regelnden Sekundärspannung ohne Einschränkungen verwendet werden. Durch den Einsatz des Bauteils mit veränderbarer Stromdurchlässigkeit fließt im Stromkreis dieser Sekundärwicklung immer ein Mindeststrom. Es wird dadurch auch bei Leerlauf an den Ausgangsklemmen dieser Sekundärspannung eine Belastung derselben intern erzwungen, so daß die Breite der primärseitig eingespeisten Impulse nicht unter einen vorgegebenen Wert absinkt. Sekundärseitig steht damit immer eine ausreichende Energie zur Verfügung, so daß weitere sekundärseitige Wicklungen immer eine ausreichende Spannung liefern können.

Vorteilhafte Ausgestaltungen der Erfindung gehen aus den Unteransprüchen hervor.

Das Verfahren nach der Erfindung wird im folgenden an Hand der Zeichnungen als Ausführungsbeispiel erläutert.

Es zeigen:

Fig. 1 in einem Blockschaltbild einen Gleichspannungswandler mit angeschlossenen Verbrauchern.

Fig. 2 eine Prinzipschaltung des Gleichspannungswandlers.

Fig. 3 eine Ausgestaltung der Schaltung nach Fig. 2

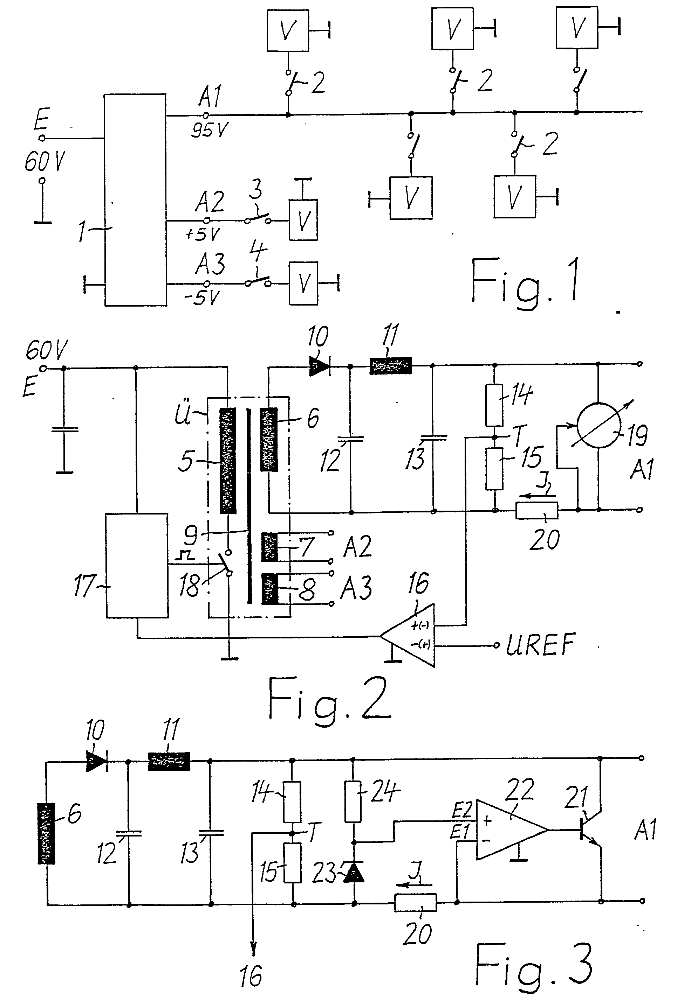

Der in Fig. 1 schematisch angedeutete getaktete Gleichspannungswandler 1 - im folgenden weiter kurz als "Wandler" bezeichnet - hat einen primärseitigen Eingang E, an dem beispielsweise 60 V Gleichspannung anliegen, und drei sekundärseitige Ausgänge A1, A2 und A3. Der Ausgang A1 soll beispielsweise eine Gleichspannung von 95 V liefern. Am Ausgang A2 stehen + 5V Gleichspannung und am Ausgang A3 -5V Gleichspannung zur Verfügung. An alle drei Ausgänge kann über Schalter 2 bzw. 3 und 4 eine beliebige Anzahl von Verbrauchern V angeschlossen werden. Die Spannung am Ausgang A1 wird durch Beeinflussung der primärseitig intern generierten Gleichstromimpulse - im folgenden weiter kurz als "Impulse" bezeichnet-geregelt.

Im dargestellten Ausführungsbeispiel weist der Wandler 1 drei Ausgänge auf. Er soll mindestens zwei Ausgänge haben. Es können aber auch mehr als zwei Ausgänge sein. Von den Ausgängen ist jeweils nur einer durch primärseitige Eingriffe geregelt. Dazu wird vorzugsweise der Ausgang verwendet, der für die höhere bzw. höchste Belastung ausgelegt ist. Im vorliegenden Ausführungsbeispiel ist der Unterschied der Spannungswerte vom Ausgang A1 zu den Ausgängen A2 und A3 erheblich. Die Spannungswerte der einzelnen Ausgänge können jedoch auch weniger unterschiedlich sein und es können auch Ausgänge vorhanden sein, an denen die gleichen Spannungswerte abgegriffen werden können. Wesentlich ist nur, daß die Spannung an einem der Ausgänge durch primärseitigen Eingriff geregelt wird.

Der genauere Aufbau des Wandlers 1 und seine Wirkungsweise gehen aus den Fig. 2 und 3 hervor:

Der Wandler 1 weist einen Übertrager Ü auf, der in Fig. 2 durch eine strichpunktierte Linie umrandet ist. Der Übertrager Ü hat eine Primärwicklung 5 und drei Sekundärwicklungen 6, 7 und 8. Die Spannung am Ausgang A1 resultiert aus der Sekundärwicklung 6, die am Ausgang A2 aus der Sekundärwicklung 7 und die am Ausgang A3 aus der Sekundärwicklung 8. Der Kern des Übertragers Ü ist mit 9 bezeichnet. Da nur die Spannung am Ausgang A1 geregelt wird, ist auch nur die Sekundärwicklung 6 mit angeschlossenen Schaltungselementen dargestellt. Die entsprechenden Schaltungen für die Sekundärwicklungen 7 und 8 sind der Einfachheit halber fortgelassen.

Die in der Sekundärwicklung 6 induzierte Spannung wird über einen Gleichrichter 10 gleichgerichtet. Zu der Schaltung können außerdem eine Drossel 11 und zwei Kondensatoren 12 und 13 gehören. Die gleichgerichtete und zu regelnde Spannung in Höhe von beispielsweise 95 V steht am Ausgang A1 zur Verfügung. Sie liegt dementsprechend auch an einem aus den Widerständen 14 und 15 gebildeten Spannungsteiler an. Eine dieser Spannung proportionale Spannung wird am Teilerpunkt T des Spannungsteilers abgegriffen und einem Komparator 16 zugeführt, der beispielsweise als Operationsverstärker ausgebildet ist. An den Komparator 16 wird über einen zweiten Eingang eine Referenzspannung UREF angelegt. Sein Ausgang ist mit einem Steuergerät 17 verbunden, . von welchem die Impulse erzeugt werden. Der Komparator 16 beeinflußt somit nach Maßgabe der am Spannungsteiler 14, 15 anliegenden Spannung das Steuergerät 17 und damit die Breite der Impulse. Durch die Impulse wird ein im Stromkreis der Primärwicklung 5 liegender Schalter 18 betätigt. Die zeitliche Dauer der "Offen-" oder "Geschlossen-Stellung" des Schalters 18 hängt von der Breite der Impulse ab. Der Schalter 18 kann beispielsweise als Transistor ausgeführt sein. Nach Maßgabe der am Ausgang A1 abgenommenen Leistung wird die Breite der Impulse verändert. Damit wird die sekundärseitig zur Verfügung gestellte Energie beeinflußt, was sich nicht nur auf die Sekundärwicklung 6, sondern auch auf die Sekundärwicklungen 7 und 8 auswirkt.

Um bei Leerlauf der Sekundärspannung A1 ein Zusammenbrechen der Spannung an den Sekundärwicklungen 7 und 8 zu verhindern, ist parallel zum Ausgang A1 ein Bauteil 19 angeschlossen, dessen Stromdurchlässigkeit wird in Abhängigkeit vom fließenden Strom I geregelt. Dazu wird die Spannung verwendet, die an einem im Stromkreis liegenden Widerstand 20 abfällt. Wenn der über den Widerstand 20 fließende Strom 1 einen vorgebenen Mindestwert unterschreitet, wird das Bauteil 19 stromdurchlässig, so daß im Stromkreis der Sekundärwicklung 6 immer ein Mindeststrom fließt, der eine Mindestbelastung auch bei Leerlauf am Ausgang A1 bewirkt. Es ist damit auf einfache Weise sichergestellt, daß die im Wandler 1 sekundärseitig zur Verfügung gestellte Energie stets ausreicht, um die Spannung an den Sekundärwicklungen 7 und 8 aufrechtzuerhalten.

Das Bauteil 19 kann entsprechend Fig. 3 als Transistor 21 ausgebildet sein. Der Transistor 21 ist als bipolarer Transistor dargestellt. Es kann aber auch ein Feldeffekttransistor, insbesondere ein MOSFET, eingesetzt werden. Der Transistor 21 ist mit seinem Strompfad parallel zum Ausgang A1 angeschlossen. Seine Steuerelektrode (Basis) ist direkt oder indirekt, beispielsweise unter Zwischenschaltung einer Anpassungsschaltung, mit einem Komparator 22 verbunden, an dessen Eingang E1 die am Widerstand 20 abfallende Spannung anliegt. Am Ausgang E2 des Komparators 22 liegt eine Referenzspannung an, die im dargestellten Ausführungsbeispiel von einer Zenerdiode 23 geliefert wird. Die Zenerdiode 23 bildet mit einem Widerstand 24 einen Spannungsteiler. Der Komparator 22 kann wieder als Operationsverstärker ausgeführt sein.

Die Schaltung nach Fig. 3 arbeitet wie folgt:

Solange am Ausgang A1 eine ausreichend hohe Leistung abgenommen wird, fließt ein ausreichend hoher Strom I, so daß der Transistor 21 stromundurchlässig ist. Mit sinkender Belastung am Ausgang A1 sinkt der über den Widerstand 20 fließende Strom und die Spannung am Eingang E1 des Komparators 22 wird kleiner. Dementsprechend steigt die Spannung am Ausgang A des Komparators 22 an und der Transistor 21 wird bei einem vorher eingestellten Wert stromdurchlässig. Dieser Wert ist so eingestellt, daß der über den Widerstand 20 fließende Strom insgesamt einen bestimmten Wert nicht unterschreiten kann, wobei ein Teil des Stroms dann bereits über den Strompfad des Transistors 21 fließt. Wenn am Ausgang A1 überhaupt kein Verbraucher V mehr angeschlossen ist (Leerlauf), dann führt der Transistor 21 den gesamten als Minimalwert vorgegebenen Strom, der auch über den Widerstand 20 fließt. Der Minimalwert des Stromes wird durch den Widerstand 20 festgelegt, der einen entsprechenden Spannungsabfall zur Beeinflussung des Komparators 22 bewirken muß. Der minimale Strom entspricht einer minimal zulässigen Belastung des Ausgangs A1 und garantiert die ausreichende Versorgung der Ausgänge A2 und A3.

**Ansprüche**

Verfahren zum Betreiben eines elektrischen Stromversorgungsgeräts mit Gleichspannungswandler, der einen Übertrager mit einer Primärwicklung und mindestens zwei Sekundärwicklungen aufweist, mit welchem die Primärwicklung aus einer Gleichspannungsquelle mit Gleichstromimpulsen beaufschlagt wird, mit welchem die Spannung einer der Sekundärwicklungen des Übertragers geregelt wird und mit welchem die Breite der Gleichstromimpulse in Abhängigkeit von der zu regelnden Spannung geregelt wird, dadurch gekennzeichnet, daß parallel zu der zu regelnden Spannung ein Bauteil (19) mit veränderbarer Stromdurchlässigkeit angeschlossen wird, dessen Stromdurchlässigkeit in Abhängigkeit von der Höhe des im Stromkreis der die zu regelnde Spannung liefernden Sekundärwicklung (6) fließenden Stromes (1) derart geregelt wird, daß der Strom unabhängig von der am Ausgang (A1) anliegenden Belastung einen vorgegebenen Mindestwert nicht unterschreitet.

2. Verfahren nach Anspruch 1, dadurch gekennzeichnet,, daß für die Regelung der Breite der Gleichstromimpulse die Sekundärwicklung (6) verwendet wird, die für die größere bzw. größte Belastung ausgelegt ist.

3. Verfahren nach Anspruch 1 oder 2, dadurch gekennzeichnet, daß als Bauteil (19) mit veränderbarer Stromdurchlässigkeit ein Transistor (21) verwendet wird.

4. Verfahren nach einem der Ansprüche 1 bis 3, dadurch gekennzeichnet, daß als Transistor (21) ein Feldeffekttransistor, vorzugsweise ein MOSFET, verwendet wird.

5. Verfahren nach einem der Ansprüche 1 bis 3, dadurch gekennzeichnet, daß als Transistor (21) ein bipolarer Transistor verwendet wird.

6. Verfahren nach einem der Ansprüche 1 bis 5, dadurch gekennzeichnet, daß die Steuerelektrode des Transistors (21) mit dem Ausgang (A) eines an eine Referenzspannung angeschlossenen Komparators (22) direkt oder indirekt verbunden wird, der durch eine an einem im Stromkreis der Sekundärwicklung (6) liegenden Widerstand (20) abfallende Spannung gesteuert wird.

Fig. 1

Fig. 2

Fig. 3

88-10/D